# EUROPEAN PATENT SPECIFICATION

(11) **EP 0 657 310 B1**
(45) Date of publication and mention of the grant of the patent: **12.08.1998**
(21) Application number: 94118651.2
(22) Date of filing: 28.11.1994
(51) Int. Cl.: B44C 5/04, B29C 51/14, E04C 2/24, B32B 27/12

(54) **Panel of plastic material, and process and device for its fabrication**
Platte aus Kunststoff sowie Verfahren und Vorrichtung zu deren Herstellung
Panneau en matière plastique et procédé et dispositif pour sa fabrication

(30) Priority: 07.12.1993 IT GE930104
(43) Date of publication of application: 14.06.1995
(73) Proprietor: G.O.R. Applicazioni Speciali S.p.A., 10060 Buriasco, Torino (IT)
(72) Inventor: Venere, Giorgio, I-12035 Dronero, Cuneo (IT); Odino, Adriano, I-10060 Angrogna, Torino (IT)
(74) Representative: Porsia, Bruno

(56) References cited:
- EP-A- 0 300 521
- WO-A-82/00266
- GB-A- 2 143 463
- US-A- 4 746 688

## Description

The invention relates to a panel of plastic material.

Panels of plastic material are very widely used at present in various branches of industry, for example in the inner facing of vehicles, in building, in furniture manufacture, and other areas.

The object of the invention is to provide a facing panel of the type indicated above, in such a way that its weight can be reduced by simple and easily formed construction, while improving its qualities of flexibility, rigidity and strength.

The invention achieves the said object with a panel of the type described initially which consists of two sheets known under the registered trademark Wood-Stock, in other words a thermoplastic material (polypropylene) filled with wood flour or similar, these two sheets having delimited areas of mutual contact which are distributed in any way, are of any shapes and sizes, and are surrounded at least partially by cavity areas in which the said two sheets are separate from each other; the cavity areas may or may not communicate with each other.

Each of the sheets of Wood-Stock has, in particular, a thickness from 0.3 to 1.2 mm, preferably from 0.5 to 0.6 mm.

The outer side of the sheet on the visible face of the panel, and optionally also the outer side of the sheet on the rear face of the panel, may be covered with a finishing sheet, such as a cloth, a fabric, a non-woven fabric, simulated leather, adhesive melamine papers, or similar.

The finishing sheets, particularly non-woven fabrics, may have weights from 20 g/m² to 500 g/m². In one possible and preferred composition, the sheet consists of polyester, viscose, polypropylene, nylon, cotton mixture, PVC, melamine material, or similar.

In one embodiment, one of the sheets of Wood-Stock is substantially flat, or is shaped in a form complementary to the surface to which it is to be applied or adapted, or has a substantially continuous development according to the shape required by the client, while the other is further shaped so that it has a plurality of indentations in the areas of contact with the first sheet. The sheet provided with indentations may form the visible face or the rear face of the panel, as necessary.

In an alternative embodiment, both sheets of Wood-Stock may have a plurality of indentations forming the areas of mutual contact.

Owing to this construction, the weight of the panel according to the invention may be reduced by between approximately 10% and 60% by comparison with Wood-Stock panels of conventional construction, with a consequent saving of materials and costs.

The particular structure of the panel provides it with considerable flexibility while considerably increasing its strength.

Despite the reduction of weight by comparison with the conventional solutions, the panel maintains its characteristics of rigidity. This particular construction also enables the load-bearing section to be varied as necessary and thus to make the most critical areas stronger.

The invention also relates to a method of fabricating the said panels, comprising the following stages:
heating the Wood-Stock sheets;
feeding the lower sheet to the lower part of a press;
inserting at least one or more blowing nozzles so that they are disposed above the outer edge of the lower sheet of Wood-Stock;
feeding the second sheet of Wood-Stock to a position of superimposition on the first lower sheet of Wood-Stock, so that the second sheet is disposed over the end of the blowing nozzle;
partially compressing the two sheets of Wood-Stock against each other along their outer edges, to provide a substantially hermetic joint between the sheets of Wood-Stock along the outer edges;
blowing air between the sheets by means of the blowing nozzle or nozzles, and closing the upper press part against the lower press part.

According to an improvement, the outer finishing layer or layers of the sheets of Wood-Stock may be applied to them beforehand, for example during the stage of extrusion of the sheets.

The device for the fabrication of the panel according to the method described above comprises a heating oven followed by a forming press consisting of two parts which can be compressed against each other, preferably while in the lower press part there are provided removable means of compressing the two sheets of Wood-Stock against each other along their outer edges.

The method and device described above for the fabrication of the panel according to the invention may be used to form panels having either intercommunicating cavities or separate cavities, in a simple, relatively rapid way, while limiting the air requirement and the number of blowing nozzles.

The invention also relates to other characteristics which further improve the panel and the method and device for its fabrication as described above, which form the subject of the subsidiary claims.

The particular characteristics of the invention and the advantages derived therefrom will be understood in greater detail from the description of some preferred embodiments, illustrated by way of example and without restriction in the attached drawings, in which
Fig. 1 is a perspective view of a panel according to the invention;
Fig. 2 is an installation for the fabrication of the panel according to Fig. 1;
Fig. 3 is a transverse section through the press in the open position;
Fig. 4 is a transverse section through the press in the closed position;
Fig. 5 is a plan view of the lower press part for the application of a method of fabricating the sheet according to a variant embodiment;
Figs. 6 to 9 are transverse sections through the press for fabricating the panel according to the invention in some of the stages of the forming process according to the said variant embodiment of the invention.

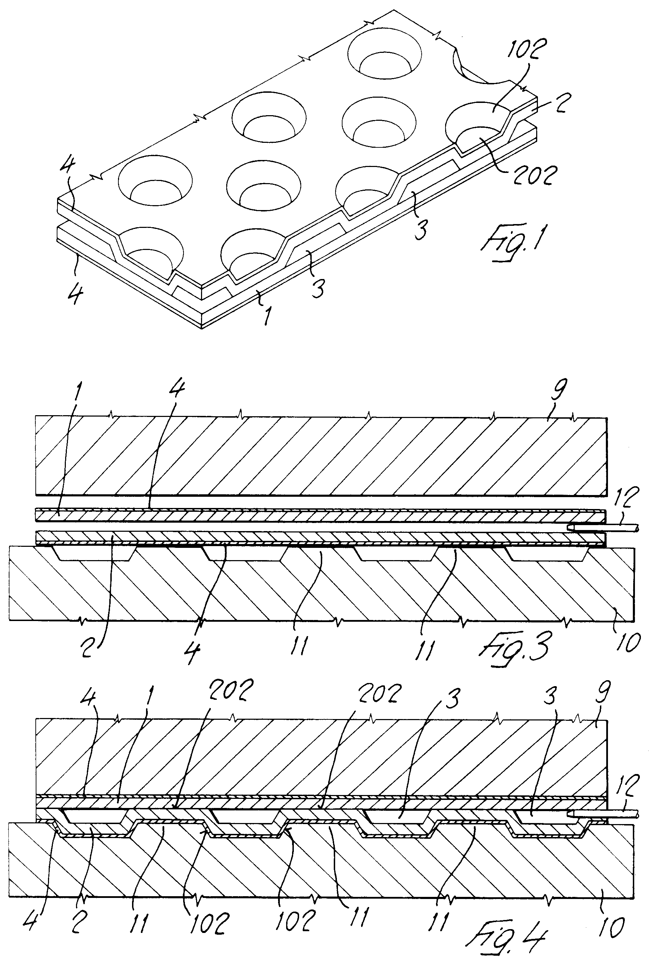

With reference to Fig. 1, a panel for the inner facing of the passenger compartment of motor vehicles, particularly, for example, for the roof or the like consists of two thin sheets 1, 2 of what is known as Wood-Stock, in other words thermoplastic material, for example polypropylene filled with wood flour, or similar.

One sheet 1 of Wood-Stock is substantially flat or shaped with a substantially continuous development of its surface. The other sheet 2 is shaped so that it has a plurality of indentations 102 on the outer side, extending towards the associated sheet 1, such that the surface 202 of the base side of the said indentations 102 inside the panel come into contact with it, and the two inner sides of the two sheets 1 and 2 are fixed together at the said surfaces 202.

The indentations 102 are of any shape and are distributed in any way over the surface of the panel, the sheet 2 being shaped in such a way that the contact areas 202 are surrounded completely by an area in which the sheets 1 and 2 are spaced apart to form a cavity 3. Also, all of the cavities 3 associated with the areas of contact between sheets 1 and 2 communicate with each other.

Both the sheets 1 and 2 have on their outer sides a finishing covering which consists of a thin sheet 4. The finishing sheet 4 may consist of any material, such as fabric, non-woven fabric, simulated leather, or similar.

Preferably, the finishing sheet 4 consists of a non-woven fabric, with a weight from 20 g/m² to 500 g/m² and comprising polyester, viscose, polypropylene, nylon, and cotton mixture.

Advantageously but not necessarily, the finishing sheet 4 is applied to the sheets of Wood-Stock before the fabrication of the panel, particularly at the stage of rolling of the sheet of Wood-Stock, so that at the time of fabrication of the panel the sheets of Wood-Stock are formed together with the attached finishing sheet.

The depth of the cavities 3 may vary from a minimum of 2 to a maximum of 50 mm, according to the applications for which the panel is intended. Where the panel is used to form inner facings of vehicles, particularly the roofs of motor vehicles, sheets of Wood-Stock with a thickness preferably between 5 and 7 mm are used.

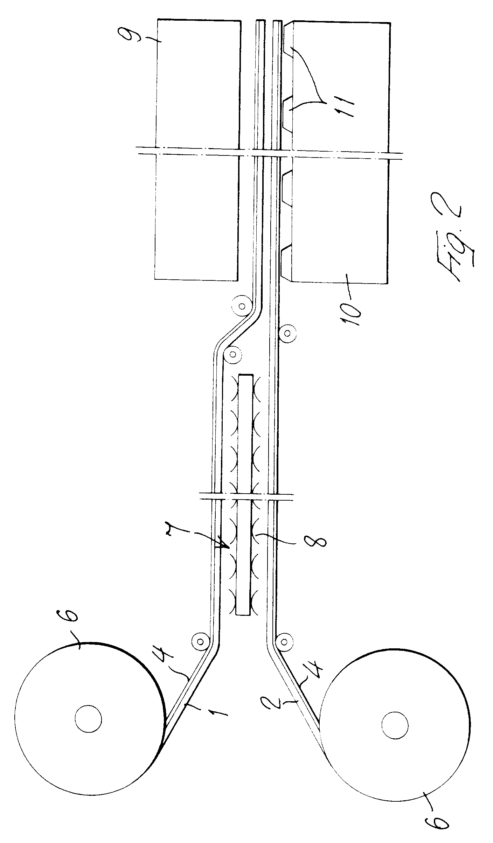

Figs. 2 to 4 show a first example of a process of fabrication of the panel according to the invention.

The two sheets of thermoplastic material 1, 2, namely Wood-Stock, with the finishing sheets 4 applied to the opposite sides, are unwound from two reels 6 and are fed simultaneously into a heating oven 7, in which heating lamps 8 are provided between the opposing non-covered sides of the sheets 1, 2. The two heated sheets 1, 2 are then fed between two press parts 9, 10 of the forming station.

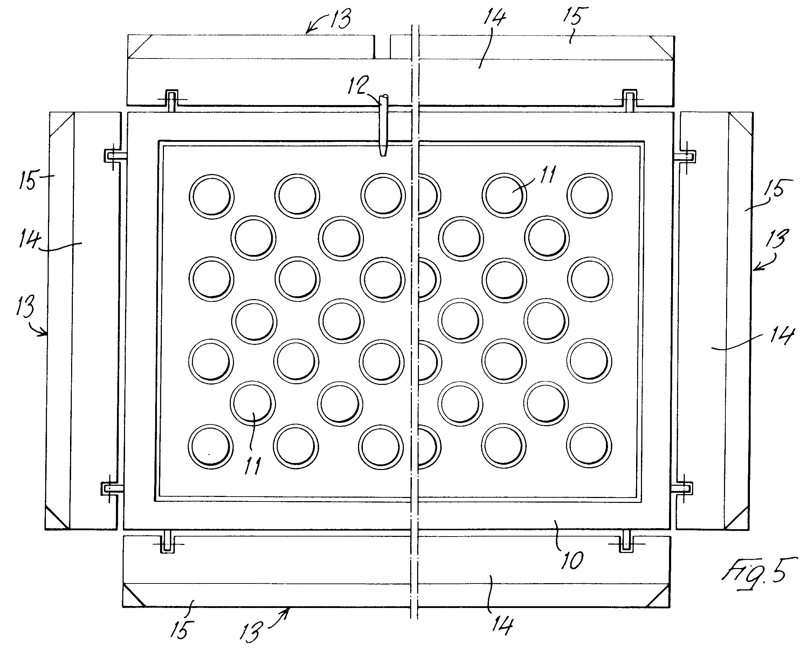

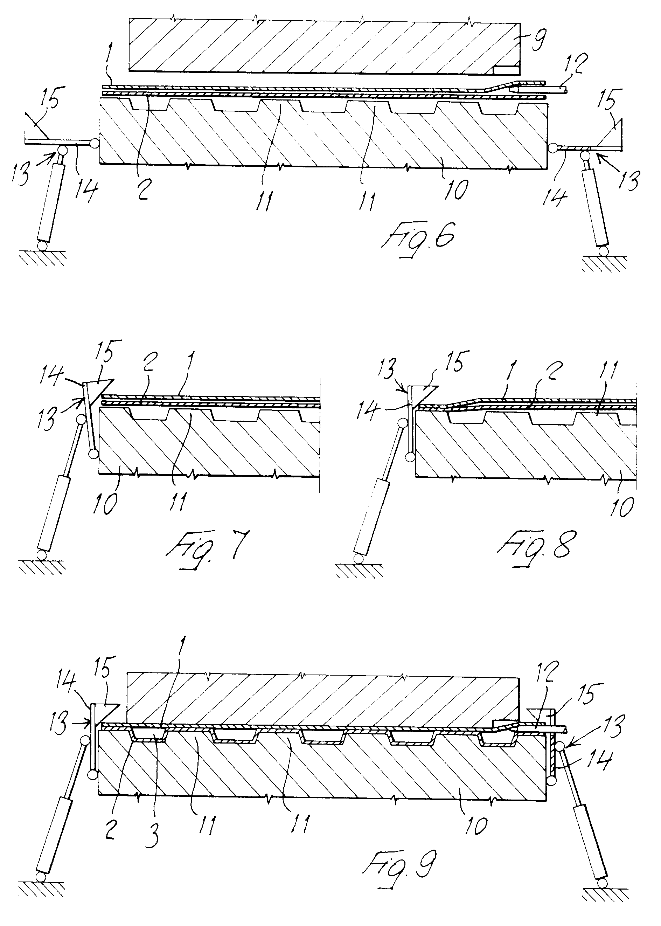

As is clearly shown in the sections in Figs. 3 and 4, one of the two press parts 9, 10, or both, in particular in the example the lower press part 10, have projections 11 projecting towards the opposing part, in this case the upper part 9, the said projections 11 being surrounded by intercommunicating depressions. In the example illustrated, the upper press part 9 is substantially smooth or shaped in a form corresponding to the visible shape of the panel.

One or more positions for one or more corresponding blowing nozzles 12 are provided between the two press parts 9, 10, at one point at least of their outer edge and in an area communicating with the depressions among the projections 11.

The nozzle may consist of a sleeve or similar which can be interposed between the two sheets 1, 2 disposed between the two press parts 9, 10.

When the two press parts 9, 10 are closed against each other, and preferably as soon as the final closed position is reached, pressurized air, optionally treated (heated, dehumidified or humidified) is introduced through the blowing nozzle 12 between the two sheets 1, 2 disposed between the two press parts 9, 10. The areas corresponding to the depressions between the projections 11 of the lower press part 10 are therefore filled under pressure, while the two sheets 1, 2 are made to adhere completely to the profiles of the corresponding press parts 9, 10. The two sheets are then joined together at the upper surfaces of the projections 11 of the lower press part, between which and the coincident surface of the upper press part 9 the facing sides of the sheets 1, 2 are pressed against each other. In the areas of the depressions, however, the two sheets 1, 2 are detached from each other, forming the network of intercommunicating cavities 3.

Figs. 5 to 9 show a forming press for the fabrication of the panels according to a variant of the process described previously, with which it is possible to form panels with cavities divided into areas which do not communicate with each other.

With reference to Fig. 5, means 13 of pressing the outer edges of the two sheets of Wood-Stock 1, 2 are associated with each corresponding side of the lower part 10 of the press. The said means consist, in particular, of supporting plates 14 hinged to the corresponding side of the lower press part 10 so that they can be turned against it about an axis parallel to the associated side. Fixed to the free ends of the plates 14 are pressing fillets 15 which project beyond the plates so that they come down upon the outer edges of the sheets 1, 2 disposed on the lower press part, thus clamping the said edges together and against the flat outer edge of the lower press part 10. The pressing fillets 15 may be made of felt, teflon, or similar. Their pressing surface may advantageously be inclined to form a wedge, so that it progressively engages and compresses the outer edges of the sheets 1, 2. The associated ends of the pressing fillets 15 are made with complementary shapes, for example inclined at 45°, so that they come down upon the sheets 1, 2 in the corner areas also.

The sheet 2 is initially disposed on the lower press part 10. The blowing nozzle or nozzles 12 are then inserted at predetermined points on the outer edge of the sheet, and the sheet 1 is laid on the sheet 2. The plates 14 are then swung upwards, as illustrated in Figs. 7 and 8, in which terminal upper position the associated pressing fillets 15 come down upon the outer edges of the sheets 1, 2, thus clamping them together.

A cushion of air is generated through the blowing nozzle or nozzles 12 between the two sheets 1, 2, and the press is closed, as a result of which the compression of the two sheets 1, 2 against each other compresses the cushion of air and consequently pushes the sheet 2 into the depressions of the lower press part.

## Claims

1. Panel of plastic material, consisting of two sheets (1, 2) of thermoplastic material, like polypropylene, filled with wood flour or similar, known as Wood-Stock, the two sheets (1, 2) having delimited areas of mutual contact (202) which are distributed in any way, are of any shapes and sizes, and are surrounded at least partially by cavity areas (3) in which the said two sheets (1, 2) are separate from each other; the cavity areas (3) may or may not communicate with each other, and the thickness of each of the two sheets (1, 2) is from 0.3 to 1.2 mm.

2. Panel according to Claim 1, characterized in that each sheet of thermoplastic material (1, 2) has a thickness preferably from 0.5 to 0.6 mm.

3. Panel according to Claim 1 or 2, characterized in that the outer side of the sheet (1) on the visible face of the panel, and optionally also the outer side of the sheet (2) on the rear face of the panel, may be covered with a finishing sheet (4), such as a cloth, a fabric, a non-woven fabric, simulated leather, adhesive papers.

4. Panel according to Claim 3, characterized in that the finishing sheet (4) consists of polyester, viscose, polypropylene, nylon, cotton mixture, PVC, melamine material.

5. Panel according to one or more of the preceding claims, characterized in that at least one finishing sheet (4) consists of a non-woven fabric with a weight from 20 g/m² to 500 g/m².

6. Panel according to one or more of the preceding claims, characterized in that at least the finishing sheet (4) on the side which is applied to a supporting structure consists of an adhesive melamine paper.

7. Panel according to one or more of the preceding claims, characterized in that at least one of the sheets (1, 2) of thermoplastic material is substantially flat, or is shaped in a form complementary to the surface to which it is to be applied or adapted, or has a substantially continuous development according to the shape required by the client, while the other (1, 2) is further shaped so that it has a plurality of indentations (102) in the areas of contact (202) with the first sheet (1), and the sheet (2) provided with indentations (102) may form the visible face or the rear face of the panel, as necessary.

8. Panel according to one or more of the preceding claims, characterized in that both sheets (1, 2) of thermoplastic material may have a plurality of indentations (102) forming the areas of mutual contact (202).

9. Panel according to one or more of the preceding claims, characterized in that the depth of the cavities (3) is between 2 and 50 mm.

10. Panel according to one or more of the preceding claims, characterized in that it is used for the internal facing of vehicles or similar and the cavities have a depth of 5 to 7 mm.

11. Process for the fabrication of the panel according to one or more of the preceding claims, comprising the following stages:
- heating the sheets (1, 2) of thermoplastic material;
- feeding a first lower sheet (2) to the lower part (10) of a press;
- inserting at least one or more blowing nozzles (12) so that they are disposed above the outer edge of the lower sheet (2) of thermoplastic material;
- disposing a second sheet (1) over the first lower sheet (2) so that the second sheet is disposed over the end of the blowing nozzle or nozzles (12);
- partially compressing the two superimposed sheets (1, 2) of thermoplastic material against each other along their outer edges, to provide a substantially hermetic joint between the sheets along the said edges;
- generating a cushion of air between the two superimposed sheets (1, 2) of thermoplastic material by blowing air between them by means of the blowing nozzle or nozzles (12);
- closing the upper press part (9) against the lower press part (10).

12. Process according to Claim 11, characterized in that the finishing sheets (4) may be applied to the sheets (1, 2) of thermoplastic material at a stage preceding their forming, in particular during the stage of extrusion of the sheets (1, 2) of thermoplastic material, or at a stage following the forming stage.

13. Process according to Claim 11 or 12, characterized in that the blowing air may be treated, for example heated, humidified or dehumidified.

14. Device for the fabrication of the panel according to one or more of the preceding Claims 1 to 10, and for the application of the process as claimed in Claims 11 to 13, comprising a station (7, 8) for heating the sheets (1, 2) of thermoplastic material followed by a forming station with a forming press consisting of two parts, an upper part (9) and a lower part (10), at least one (10) of which has projections (11) surrounded at least partially by depressions, while preferably the lower press part (10) has removable means (13) for mutual compression of the outer edges of the sheets of thermoplastic material (1, 2).

15. Device according to Claim 14, characterized in that the removable means (13) for compression of the outer edges of the sheets (1, 2) of thermoplastic material consist of peripheral jaws for clamping the said outer edges against the outer edge of the lower press part (10).

16. Device according to Claim 15, characterized in that the removable means (13) of compression consist of wedge-shaped or substantially wedge-shaped pressing fillets (15), whose lengths correspond to the lengths of each side of the lower press part (10), and which are carried by plates (14) hinged to the corresponding side of the lower press part (10) so that they can be turned about an axis parallel to the corresponding side of the lower press part (10).

17. Device according to Claim 16, characterized in that the ends of the pressing fillets (15) associated with the corner areas of the sheets (1, 2) of thermoplastic material are made to be complementary to each other and to fit together, being, for example, inclined at 45° in the manner of a frame.

18. Device according to one or more of the preceding claims, characterized in that the pressing fillets (15) consist of a felt or a teflon fillet.

## Patentansprüche

1. Platte aus Kunststoff aus zwei mit Holzmehl, sogenanntem "Wood-Stock", oder ähnlichem gefüllten Folien (1, 2) aus thermoplastischem Material, z.B. Polypropylen, wobei die beiden Folien (1, 2) in abgegrenzten Kontaktbereichen (202) miteinander in Kontakt sind und die Kontaktbereiche beliebig verteilt, von beliebiger Form, von beliebiger Größe und wenigstens teilweise von Hohlraumbereichen (3) umgeben sind, innerhalb welcher die beiden Folien (1, 2) voneinander getrennt sind; die Hohlraumbereiche (3) können miteinander verbunden oder nicht miteinander verbunden sein, und die Dicke jeder der beiden Folien (1, 2) beträgt zwischen 0,3 und 1,2 mm.

2. Platte nach Anspruch 1, dadurch gekennzeichnet, daß jede Folie (1, 2) aus thermoplastischem Material eine Dicke von vorzugsweise 0,5 bis 0,6 mm besitzt.

3. Platte nach Anspruch 1 oder 2, dadurch gekennzeichnet, daß die Außenseite der Folie (1) auf der sichtbaren Seite der Platte und wahlweise auch die Außenseite der Folie (2) auf der Rückseite der Platte mit einer Deckfolie (4), wie z.B. einem Tuch, einem gewebten oder nicht-gewebten Stoff, Lederimitat oder klebendem Papier, versehen sein können.

4. Platte nach Anspruch 3, dadurch gekennzeichnet, daß die Deckfolie (4) aus Polyester, Viskose, Polypropylen, Nylon, Baumwollmischung, PVC oder Melamin-Material besteht.

5. Platte nach einem oder mehreren der vorangehenden Ansprüche, dadurch gekennzeichnet, daß wenigstens eine Deckfolie (4) aus nicht-gewebtem Stoff mit einem Gewicht von 20 g/m² bis 500 g/m² besteht.

6. Platte nach einem oder mehreren der vorangehenden Ansprüche, dadurch gekennzeichnet, daß wenigstens die Deckfolie (4) auf der auf eine Tragstruktur aufgelegten Seite aus einem klebenden Melamin-Papier besteht.

7. Platte nach einem oder mehreren der vorangehenden Ansprüche, dadurch gekennzeichnet, daß wenigstens eine der Folien (1, 2) aus thermoplastischem Material im wesentlichen eben ist oder in eine zu derjenigen Oberfläche, auf die sie aufgelegt oder an die sie angepaßt wird, komplementäre Form gebracht ist oder eine im wesentlichen kontinuierliche Entwicklung gemäß der vom Kunden benötigten Form besitzt, während die andere (1, 2) weiter derart ausgeformt ist, daß sie eine Vielzahl von Vertiefungen (102) in den Bereichen (202) aufweist, die in Kontakt mit der ersten Folie (1) stehen, wobei die mit den Vertiefungen (102) versehene Folie (2) je nach Notwendigkeit die sichtbare Seite oder die Rückseite der Platte bilden kann.

8. Platte nach einem oder mehreren der vorangehenden Ansprüche, dadurch gekennzeichnet, daß beide Folien (1, 2) aus thermoplastischem Material eine Vielzahl von Vertiefungen (102) besitzen können, die die Bereiche (202) des gegenseitigen Kontakts bilden.

9. Platte nach einem oder mehreren der vorangehenden Ansprüche, dadurch gekennzeichnet, daß die Tiefe der Hohlräume (3) zwischen 2 und 50 mm liegt.

10. Platte nach einem oder mehreren der vorangehenden Ansprüche, dadurch gekennzeichnet, daß sie für die innere Auskleidung von Fahrzeugen oder dergleichen verwendet wird und daß die Hohlräume eine Tiefe zwischen 5 und 7 mm besitzen.

11. Verfahren zur Herstellung einer Platte nach einem oder mehreren der vorangehenden Ansprüche mit den folgenden Verfahrensschritten:
- Erwärmen der Folien (1, 2) aus thermoplastischem Material;
- Zuführen einer ersten, unteren Folie (2) zum unteren Teil (10) einer Presse;
- Einfahren wenigstens einer oder mehrerer Blasdüsen (12) derart, daß sie über der äußeren Kante der unteren Folie (2) aus thermoplastischem Material angeordnet sind;
- Anordnen einer zweiten Folie (1) über der ersten, unteren Folie derart, daß die zweite Folie über dem Ende der Blasdüse oder der Blasdüsen (12) angeordnet ist;
- teilweises Zusammenpressen der beiden übereinandergelegten Folien (1, 2) aus thermoplastischem Material gegeneinander entlang ihrer äußeren Kanten, um eine im wesentlichen dichte Verbindung zwischen den beiden Folien entlang ihrer Kanten herzustellen;
- Erzeugen eines Luftkissens zwischen den beiden übereinandergelegten Folien (1, 2) aus thermoplastischem Material durch Einblasen von Luft zwischen sie mittels der Blasdüse oder Blasdüsen (12);
- Andrücken des oberen Teils (9) der Presse an den unteren Teil (10) der Presse.

12. Verfahren nach Anspruch 11, dadurch gekennzeichnet, daß die Deckfolien (4) auf die Folien (1, 2) aus thermoplastischem Material in einem Verfahrensschritt vor dem Ausformen der Folien, insbesondere während des Verfahrensschritts des Extrudierens der Folien (1, 2) aus thermoplastischem Material, oder in einem Verfahrensschritt nach dem Ausformen aufgebracht werden können.

13. Verfahren nach Anspruch 11 oder 12, dadurch gekennzeichnet, daß die Blasluft behandelt, insbesondere erwärmt, entfeuchtet oder befeuchtet werden kann.

14. Vorrichtung zur Herstellung einer Platte nach einem oder mehreren der vorangehenden Ansprüche 1 bis 10 und zur Durchführung des Verfahrens wie in den Ansprüchen 11 bis 13 beansprucht, aufweisend eine Station (7, 8) zum Erwärmen der Folien (1, 2) aus thermoplastischem Material, gefolgt von einer Ausform-Station mit einer Formpresse, die aus zwei Teilen, nämlich einem oberen Teil (9) und einem unteren Teil (10) besteht, von denen wenigstens einer (10) wenigstens teilweise von Vertiefungen umgebene Vorsprünge (11) besitzt, wobei vorzugsweise der untere Teil der Presse (10) entfernbare Mittel (13) zum gegenseitigen Zusammenpressen der äußeren Kanten der Folien (1, 2) aus thermoplastischem Material aufweist.

15. Vorrichtung nach Anspruch 14, dadurch gekennzeichnet, daß die entfernbaren Mittel (13) zum Zusammenpressen der äußeren Kanten der Folien (1, 2) aus thermoplastischem Material aus peripheren Klauen zum Anklammern der äußeren Kanten an den äußeren Kanten des unteren Teils (10) der Presse bestehen.

16. Vorrichtung nach Anspruch 15, dadurch gekennzeichnet, daß die entfernbaren Mittel (13) zum Zusammenpressen aus keilförmigen oder im wesentlichen keilförmigen Druckkehlen (15) bestehen, deren Länge der Länge jeder Seite des unteren Teils (10) der Presse entspricht und die von Platten (14) getragen werden, die an der entsprechenden Seite des unteren Teils (10) der Presse angelenkt sind, so daß sie um eine zu der jeweiligen Seite des unteren Teils (10) der Presse parallele Achse geschwenkt werden können.

17. Vorrichtung nach Anspruch 16, dadurch gekennzeichnet, daß die den Eckbereichen der Folien (1, 2) aus thermoplastischem Material zugeordneten Enden der Druckkehlen (15) zueinander komplementär und zueinander passend ausgebildet sind, z.B. nach Art eines Rahmens um 45° auf Gehrung geschnitten.

18. Vorrichtung nach einem oder mehreren der vorangehenden Ansprüche, dadurch gekennzeichnet, daß die Druckkehlen (15) aus einem Filz oder einer Teflonkehle bestehen.

## Revendications

1. Panneau en matière plastique consistant en deux feuilles (1, 2) de matière thermoplastique telle que du polypropylène, garni avec de la farine de bois ou similaire connu sous la dénomination "Wood-stock", les deux feuilles (1, 2) présentant des zones délimitées de contact mutuel (202) qui sont réparties dans tous les sens, présentent des formes et dimensions quelconques, et sont entourées au moins partiellement par des zones creuses (3) dans lesquelles lesdites deux feuilles (1, 2) sont séparées l'une de l'autre; les zones creuses (3) peuvent ou non communiquer l'une avec l'autre, et l'épaisseur de chacune des deux feuilles (1, 2) est comprise entre 0,3 et 1,2 mm.

2. Panneau selon la revendication 1, caractérisé en ce que chaque feuille en matière thermoplastique (1, 2) présente une épaisseur comprise de préférence entre 0,5 et 0,6 mm.

3. Panneau selon la revendication 1 ou 2, caractérisé en ce que la face externe de la feuille (1) sur la face visible du panneau, et éventuellement aussi la face externe de la feuille (2) sur la face arrière du panneau, peuvent être recouvertes d'une feuille de finition (4), telle qu'une étoffe, un tissu, un tissu non tissé, un simili cuir et des bandes adhésives.

4. Panneau selon la revendication 3, caractérisé en ce que la feuille de finition (4) est constituée de polyester, de viscose, de polypropylène, de nylon, d'un mélange de coton, de PVC ou d'une matière stratifiée.

5. Panneau selon l'une ou plusieurs des revendications précédentes, caractérisé en ce qu'au moins une feuille de finition (4) est constituée d'un tissu non tissé présentant un poids compris entre 20 g/m² et 500 g/m².

6. Panneau selon l'une ou plusieurs des revendications précédentes, caractérisé en ce qu'au moins la feuille de finition (4) sur la face qui est appliquée sur une structure support est constituée d'une bande de mélamine adhésive.

7. Panneau selon l'une ou plusieurs des revendications précédentes, caractérisé en ce qu'au moins l'une des feuilles (1, 2) en matière thermoplastique est sensiblement plate, ou présente une forme complémentaire de celle de la surface sur laquelle elle doit être appliquée ou adaptée, ou présente un développement sensiblement continu en fonction de la forme requise par le client, alors que l'autre (1, 2) est, en outre, formée de manière à présenter une pluralité d'empreintes (102) sur les zones de contact (202) avec la première feuille (1), et en ce que la feuille (2) comportant des empreintes (102) peut former la face visible ou la face arrière du panneau, selon les besoins.

8. Panneau selon l'une ou plusieurs des revendications précédentes, caractérisé en ce que les deux feuilles (1, 2) en matière thermoplastique peuvent présenter une pluralité d'empreintes (102) formant les zones de contact mutuel (202).

9. Panneau selon l'une ou plusieurs des revendications précédentes, caractérisé en ce que la profondeur des creux (3) est comprise entre 2 et 50 mm.

10. Panneau selon l'une ou plusieurs des revendications précédentes, caractérisé en ce qu'il est utilisé pour garnir la face interne de véhicules ou similaires et en ce que les creux présentent une profondeur de 5 à 7 mm.

11. Procédé de fabrication du panneau selon l'une ou plusieurs des revendications précédentes comprenant les étapes suivantes:
chauffage des feuilles (1, 2) de matière thermoplastique;
mise en place d'une première feuille inférieure (2) sur la partie inférieure (10) d'une presse;
introduction d'au moins un ou plusieurs buses de soufflage (12) de manière à les disposer au-dessus du bord externe de la feuille inférieure (2) de matière thermoplastique;
mise en place d'une seconde feuille (1) au-dessus de la première feuille inférieure (2) de telle manière que la seconde feuille soit disposée au-dessus de l'extrémité de la ou des buses de soufflage (12);
compression partielle des deux feuilles superposées(1, 2) de matière thermoplastique l'une contre l'autre le long de leurs bords extérieurs, afin de réaliser un joint sensiblement hermétique entre les feuilles le long desdits bords;
formation d'un coussin d'air entre les deux feuilles superposées (1, 2) de matière thermoplastique en soufflant de l'air entre elles au moyen de la ou des buses de soufflage (12);
fermeture de la partie supérieure de presse (9) contre la partie inférieure de presse (10).

12. Procédé selon la revendication 11, caractérisé en ce que les feuilles de finition (4) peuvent être appliquées sur les feuilles (1, 2) de matière thermoplastique au cours d'une étape précédent leur formation, en particulier pendant l'étape d'extrusion des feuilles (1, 2) de matière thermoplastique ou au cours d'une étape suivant l'étape de formation.

13. Procédé selon la revendication 11 ou 12, caractérisé en ce que l'air de soufflage peut être traité, par exemple, chauffé, humidifié ou déshumidifié.

14. Dispositif de fabrication du panneau selon l'une ou plusieurs des revendications 1 à 10 précédentes, et de mise en oeuvre du procédé selon les revendications 11 à 13, comprenant un poste (7, 8) de chauffage des feuilles (1, 2) de matière thermoplastique suivie d'un poste de formage comprenant une presse de formage consistant en deux parties, une partie supérieure (9) et une partie inférieure (10), au moins l'une (10) d'entre elles présentant des saillies (11) entourées au moins partiellement par des creux, cependant que, de préférence, la partie inférieure de presse (10) présente des moyens amovibles (13) pour assurer la compression mutuelle des bords externes des feuilles de matière thermoplastique (1, 2).

15. Dispositif selon la revendication 14, caractérisé en ce que le moyen amovible (13) pour comprimer les bords externes des feuilles (1, 2) de matière thermoplastique sont constitués de mâchoires périphériques de serrage desdits bords externes contre le bord externe de la partie inférieure de presse (10).

16. Dispositif selon la revendication 15, caractérisé en ce que les moyens amovibles (13) de compression sont constitués de brides (15) en forme de coin ou sensiblement en forme de coin, dont les longueurs correspondent aux longueurs de chaque côté de la partie inférieure de presse (10), et qui sont supportées par des plaques (14) articulées sur les côtés correspondant de la partie inférieure de presse (10) de manière à pouvoir tourner autour d'un axe parallèle au côté correspondant de la partie inférieure de presse (10).

17. Dispositif selon la revendication 16, caractérisé en ce que les extrémités des brides (15) associées avec les zones d'angle des feuilles (1, 2) de matière thermoplastique sont réalisées de manière à être complémentaires l'une de l'autre et à s'assembler, en étant, par exemple, inclinées à 45°, à la manière d'un cadre.

18. Dispositif selon l'une ou plusieurs des revendications précédentes, caractérisé en ce que les brides (15) sont constituées de feutre ou de Téflon.
